(19) Europäisches Patentamt

European Patent Office

Office européen des brevets

(11) **EP 1 061 637 A2**

(12) **EUROPÄISCHE PATENTANMELDUNG**

(43) Veröffentlichungstag:
20.12.2000 Patentblatt 2000/51

(51) Int. Cl.$^7$: **H02M 3/158**

(21) Anmeldenummer: **00112367.8**

(22) Anmeldetag: **09.06.2000**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **18.06.1999 DE 19927903**

(71) Anmelder: **ROBERT BOSCH GMBH
70442 Stuttgart (DE)**

(72) Erfinder: **Kern, Robert
77830 Buehlertal (DE)**

(54) **Vorrichtung zum Betreiben einer Last**

(57)     Es wird eine Vorrichtung zum Betreiben einer Last (12) mit einem impulsbreitenmodulierten Signal (17) vorgeschlagen, die einen Vergleicher (19) enthält, der ein Leistungsvorgabesignal (16), welches das Tastverhältnis (TV) des impulsbreitenmodulierten Signals (17) bestimmt, mit einem Grenzwert (20) vergleicht. Bei einer Überschreitung des Grenzwerts (20) ist eine Verlängerung der Periodendauer (P1, P2) des impulsbreitenmodulierten Signals (17) vorgesehen. Die erfindungsgemäße Vorrichtung ermöglicht die Einhaltung einer vorgegebenen minimalen Ausschaltdauer (D2, D4) des impulsbreitenmodulierten Signals (17), wobei das Tastverhältnis (TV) bis nahe an 100% heranreichen kann.

Fig. 1

EP 1 061 637 A2

**Beschreibung**

Stand der Technik

Die Erfindung geht aus von einer Vorrichtung zum Betreiben einer Last nach der Gattung des unabhängigen Anspruchs. Aus der DE-US 43 40 769 ist die Ansteuerung eines Elektromotors mit einem impulsbreitmodulierten Signal bekannt, dessen Tastverhältnis in bestimmten Betriebszuständen geändert wird. Aus Gründen der Geräuschreduzierung wird während des Abschaltvorgangs des Elektromotors die Periodendauer des impulsbreitmodulierten Signals gegenüber dem Dauerbetrieb verkürzt, um einen vorgegebenen zeitlichen Verlauf des Stromabfalls zu erhalten.

Der Erfindung liegt die Aufgabe zugrunde, eine Vorrichtung zum Betreiben einer Last mit einem impulsbreitmodulierten Signal anzugeben, das einen großen Tastverhältnisbereich aufweisen kann. Die Aufgabe wird durch die im unabhängigen Anspruch angegebenen Merkmale gelöst.

Erfindungsgemäß ist ein Vergleicher vorgesehen, der ein einem Impulsbreitenmodulator zugeführtes Leistungsvorgabesignal, welches das Tastverhältnis des impulsbreitenmodulierten Signals bestimmt, mit einem Grenzwert vergleicht, wobei die Periodendauer des impulsbreitenmodulierten Signals bei einer Überschreitung des Grenzwerts verlängert ist. Die erfindungsgemäß vorgesehene Maßnahme ermöglicht die Vorgabe eines Tastverhältnisses, das nahe an 100% heranreicht, mit der Maßgabe, daß eine vorgegebene minimale Abschaltdauer nicht unterschritten werden darf.

Die Erfindung eignet sich beispielsweise zur Anwendung in Endstufen, die einen High-Side-Schalter sowie eine Pumpschaltung zur Spannungserhöhung enthalten, wobei sichergestellt sein muß, daß die Pumpschaltung zur Aufrechterhaltung der benötigten Spannungsüberhöhung gegenüber der Betriebsspannung der von der Endstufe zu versorgenden Last ausreichend in der Lage ist. Hierbei darf im allgemeinen eine minimale Schaltdauer nicht unterschritten werden. Liegt die minimal mögliche Ausschaltdauer bei etwa 5 Mikrosekunden, so bedeutet dies, daß bei einer Vorgabe der Periodendauer des impulsbreitenmodulierten Signals außerhalb des hörbaren Bereichs, entsprechend 50 Mikrosekunden oder weniger, das Tastverhältnis des impulsbreitenmodulierten Signals 90% nicht übersteigen kann. Überschreitet das Leistungsvorgabesignal den Grenzwert, der einem vorgegebenen Tastverhältnis entspricht, so wird erfindungsgemäß die Periodendauer des impulsbreitenmodulierten Signals verlängert. Wird beim angegebenen Beispiel die Periodendauer auf 10 Millisekunden verlängert, so kann das Tastverhältnis bis auf 99,95% erhöht werden, während gleichzeitig sichergestellt ist, daß die geforderten 5 Mikrosekunden eingehalten werden.

Die erfindungsgemäße Vorrichtung eignet sich zur Ansteuerung von Elektromotoren, die vorzugsweise in Verstellantrieben angeordnet sind. Bei dieser Anwendung wird bei einer Verlängerung der Periodendauer des impulsbreitenmodulierten Signals bis weit in den hörbaren Bereich eine Zunahme der Geräuschemmission verhindert, da die Induktivität des Elektromotors keine nennenswerte Stromänderung und somit keinen Momentensprung zuläßt.

Vorteilhafte Weiterbildungen und Ausgestaltungen der erfindungsgemäßen Vorrichtung ergeben sich aus abhängigen Ansprüchen.

Eine vorteilhafte Ausgestaltung sieht vor, daß das Tastverhältnis des impulsbreitenmodulierten Signals von der gegebenenfalls auftretenden Änderung der Periodendauer nicht beeinflußt ist. Bei einem Wechsel der Periodendauer ändern sich lediglich die absoluten Werte der Einschalt- und Ausschaltdauer, während das Tastverhältnis erhalten bleibt und in Abhängigkeit von dem Leistungsvorgabesignal nach einem Periodendauerwechsel kontinuierlich weiter geändert werden kann.

Bereits erwähnt wurde die besonders vorteilhafte Verwendung der erfindungsgemäßen Vorrichtung in einer Endstufe, die einen High-Side-Schalter sowie eine Pumpschaltung zur Spannungserhöhung enthält. Eine besonders zweckmäßige Ausgestaltung der erfindungsgemäßen Vorrichtung sieht bei einer solchen Verwendung vor, daß der Grenzwert auf die Funktionsfähigkeit der Pumpschaltung abgestimmt ist. Der Grenzwert entspricht einer minimalen Schaltdauer, die die Ladungspumpe zum Nachladen von elektrischer Ladung mindestens benötigt.

Weitere vorteilhafte Weiterbildungen und Ausgestaltungen ergeben sich aus der Beschreibung.

Zeichnung

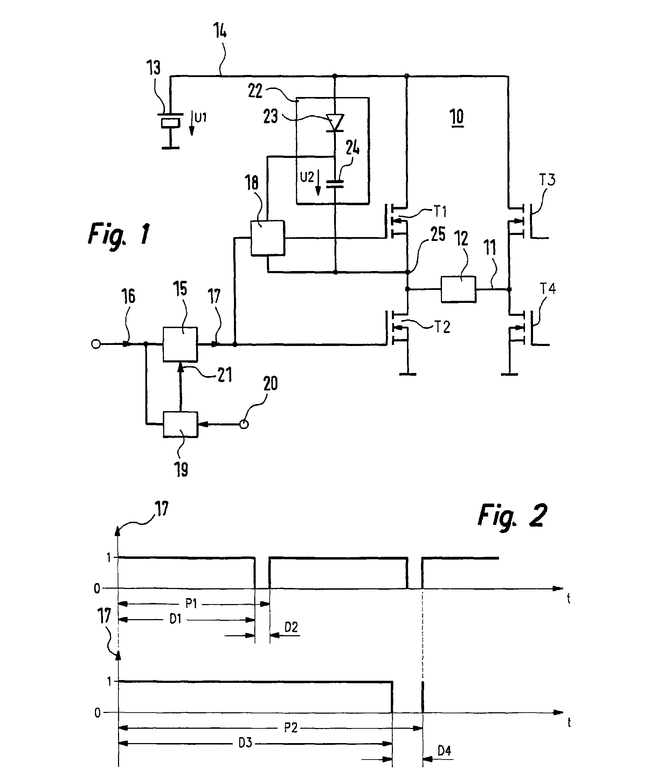

In Figur 1 ist ein Blockschaltbild einer erfindungsgemäßen Vorrichtung zum Betreiben einer Last und in Figur 2 sind Impulsdiagramme in Abhängigkeit von der Zeit, die in der Vorrichtung gemäß Figur 1 auftreten, gezeigt.

Figur 1 zeigt eine Brückenschaltung 10, die einen ersten Transistor T1, einen zweiten Transistor T2, einen dritten Transistor T3 sowie einen vierten Transistor T4 enthält. In der Diagonale 11 der Brückenschaltung 10 ist eine Last 12 angeordnet. Die Brückenschaltung 10 wird von einer Energiequelle 13 mit elektrischer Energie versorgt, die eine Betriebsspannung U1 aufweist. Das positive Potential der Energiequelle 13 führt über eine erste Stromversorgungsleitung 14 zum ersten und dritten Transistor T1, T3. Das negative Potential der Energiequelle liegt am zweiten und vierten Transistor T2, T4. In die Figur nicht eingetragen ist die zweite Stromversorgungsleitung, welche das negative Potential führt.

Ein Impulsbreitenmodulator 15 setzt ein Leistungsvorgabesignal 16 in ein impulsbreitenmoduliertes Signal 17 um, das dem zweiten Transistor T2 unmittelbar als Schaltsignal zugeleitet wird und das über eine Ansteuerschaltung 18 den ersten Transistor T1 schaltet.

Das Leistungsvorgabesignal 16 gelangt weiterhin an einen Vergleicher 19, der das Leistungsvorgabesignal 16 mit einem Grenzwert 20 vergleicht und in Abhängigkeit vom Vergleichsergebnis ein Umschaltsignal 21 an den Impulsbreitenmodulator 15 abgibt.

Die Ansteuerschaltung 18 wird von einer Pumpschaltung 22 mit elektrischer Energie versorgt. Die Pumpschaltung 22 enthält eine an der ersten Stromversorgungsleitung 14 angeschlossene Diode 23, sowie einen in Reihe mit der Diode 23 geschalteten Pumpkondensator 24, der am Verbindungspunkt 25 des ersten und zweiten Transistors T1, T2 angeschlossen ist, an dem auch die Last 12 liegt. Am Pumpkondensator 24 tritt die Pumpspannung U2 auf, die die Versorgungsspannung der Ansteuerschaltung 18 bildet.

Figur 2 zeigt Impulsdiagramme in Abhängigkeit von der Zeit t. Das obere und untere Bild von Figur 2 zeigt jeweils das impulsbreitenmodulierte Signal 17 in unterschiedlichen Betriebszuständen. Die Ordinatenbeschriftung mit „Null" und „Eins" soll die Bedeutung haben, daß bei einer „Eins" ein Einschaltzustand und bei einer „Null" ein Ausschaltzustand des jeweiligen Transistors T1, T2 vorliegt.

Das obere Bild von Figur 2 zeigt das impulsbreitenmodulierte Signal 17 mit einer ersten Periodendauer P1. Die erste Einschaltdauer D1 wird gefolgt von einer ersten Ausschaltdauer D2. Das Tastverhältnis bzw. das Impulsbreitenverhältnis ergibt sich zu:

$$TV = D1/P1 \quad bzw. \quad TV = D1/(D1+D2)$$

Im unteren Bild von Figur 2 weist das impulsbreitenmodulierte Signal 17 eine zweite, längere Periodendauer P2 auf. Eine zweite Einschaltdauer D3 wird gefolgt von einer zweiten Ausschaltdauer D4.

Die erfindungsgemäße Vorrichtung zum Betreiben der Last 12 arbeitet folgendermaßen:

Das Leistungsvorgabesignal 16 gibt die elektrische Leistung vor, mit der die Last 12 betrieben werden soll. Das Leistungsvorgabesignal 16 wird im Impulsbreitenmodulator 15 in das impulsbreitenmodulierte Signal 17 umgesetzt, das die Transistoren T1, T2 ein- bzw. ausschaltet. Auf die Ansteuerung der Transistoren T3, T4 wird im folgenden nicht mehr näher eingegangen, da sie in gleicher Weise wie diejenig der Transistoren T1, T2 realisiert werden kann. Beispielsweise könnten der erste Transistor T1 und der vierte Transistor T4 bzw. der zweite Transistor T2 und der dritte Transistor T3 jeweils gleichzeitig angesteuert werden. Die Transistoren T1, T2 legen einen Anschluß der Last 12 und den Verbindungspunkt 25 abwechselnd auf das positive oder negative Potential der Energiequelle 13. Im gezeigten Ausführungsbeispiel steuert das impulsbreitenmodulierte Signal 17 den zweiten Transistor T2 unmittelbar an. Die Ansteuerschaltung 18 muß für eine Invertierung des impulsbreitenmodulierten Signals 17 sorgen, damit sichergestellt ist, daß nicht beide Transistoren T1, T2 gleichzeitig leiten. Durch die Vorgabe der Einschaltdauer D1, D2 des impulsbreitenmodulierten Signals 17 wird am Verbindungspunkt 25 eine mittlere Spannung vorgegeben, die der Last 12 zur Verfügung steht.

Das Leistungsvorgabesignal 16 vergleicht der Vergleicher 19 mit dem Grenzwert 20. Bei einer Grenzwertüberschreitung sorgt das Umschaltsignal 21 für eine Verlängerung der Periodendauer P1, P2 im Impulsbreitenmodulator 15. Im oberen Bild von Figur 2 sind die Verhältnisse gezeigt, wenn der Grenzwert 20 noch nicht überschritten ist, während im unteren Bild von Figur 2 die Verhältnisse nach der Grenzwertüberschreitung gezeigt sind. Unterhalb des Grenzwerts 20 liegt die erste Periodendauer P1 vor, die beispielsweise auf einen Wert festgelegt sein kann, der oberhalb der menschlichen Hörgrenze liegt. Die erste Periodendauer P1 beträgt beispielsweise 50 Mikrosekunden, entsprechend 20 kHz. Das Tastverhältnis TV, das weiter oben bereits durch das Verhältnis der Einschaltdauer D1, D3 zur Periodendauer P1, P2 definiert wurde, kann beispielsweise zwischen 0% und 95% variiert werden. Bei einem Tastverhältnis von 95% liegt die erste Ausschaltdauer D2 bei 5 Mikrosekunden, wenn als erste Periodendauer P1 50 Mikrosekunden zugrunde gelegt werden. In Abhängigkeit von der Schaltungsauslegung kann sich eine minimale Ausschaltdauer D2, D4 ergeben, die für einen ordnungsgemäßen Betrieb der Schaltung nicht unterschritten werden kann. Im gezeigten Ausführungsbeispiel wird die minimale Ausschaltdauer festgelegt durch die Pumpschaltung 22. Die Pumpschaltung 22 stellt die Betriebsspannung U2 der Ansteuerschaltung 18 bereit, die den ersten Transistor T1 schaltet. In Abhängigkeit von der Ausgestaltung der Schaltung sowie insbesondere von der Wahl des Transistortyps kann die Forderung auftreten, daß die Schaltspannung zum Schalten des ersten Transistors T1 oberhalb der Betriebsspannung U1 liegen muß. Die Pumpschaltung 22, die diese Spannung als Pumpspannung U2 am Pumpkondensator 24 bereitstellt, ist auf Potentialsprünge am Verbindungspunkt 25 angewiesen, die eine Mindestdauer nicht unterschreiten dürfen, ohne daß die Gefahr besteht, daß die Pumpspannung U2 unter einen zulässigen Wert absinkt.

Die erfindungsgemäße Vorrichtung sieht deshalb vor, daß bei Erreichen des Grenzwerts 20 die erste Periodendauer P1 auf die zweite, längere Periodendauer P2 geändert wird. Dieser Vorgang kann sowohl kontinuierlich als auch in einer Stufe erfolgen. Der Grenzfall bei einer kontinuierlichen Erhöhung ist dann erreicht, wenn bei einer Erhöhung des Leistungsvorgabesignals 16 oberhalb der Grenze 20 die Ausschaltdauer D2, D4 sich nicht ändert und nur die Einschaltdauer D1, D3 kontinuierlich erhöht wird.

Eine andere Ausgestaltung sieht eine stufenförmige Erhöhung vor, die im Extremfall aus lediglich einer einzigen Erhöhungsstufe bestehen kann. Diese Ausgestaltung ist dem Impulsdiagramm gemäß Figur 2 zugrunde gelegt. Bei einem dort gezeigten Tastverhältnis von wenigstens näherungsweise 95% wird dort von der ersten Periodendauer P1 auf die längere zweite Periodendauer umgeschaltet, unter Beibehaltung des Tastverhältnisses TV von 95%. Nach dem Überschreiten des Grenzwerts 20 ändert sich die erste Ausschaltdauer D2 unmittelbar auf die längere zweite Ausschaltdauer D4. Jetzt kann das Tastverhältnis TV auf einen Wert von über 95% bis zu einem Wert erhöht werden, bei dem die zweite Ausschaltdauer D4 wieder den minimal zulässigen Wert erreicht hat. Wird angenommen, das die erste Periodendauer P1 auf beispielsweise 50 Mikrosekunden und die zweite Periodendauer P2 auf 10 Millisekunden festgelegt ist, kann bei einer vorgegebenen minimalen Ausschaltdauer D2, D4 von 5 Mikrosekunden das Tastverhältnis TV unterhalb des Grenzwerts 20 zwischen 0% und 95% und oberhalb des Grenzwerts 20 zwischen 95% und 99,95% variiert werden. Bei einem Elektromotor als Last 12 kann eine derartig weitgehende, entweder kontinuierliche oder stufenförmige Absenkung der Periodendauer P1, P2 auf Werte, die weit im menschlichen Hörbereich liegen, zurückgegriffen werden, ohne daß Geräuschprobleme auftreten, da die induktive Komponente des Elektromotors bei einem Tastverhältnis TV von oberhalb 95% keinen nennenswerten Stromabfall mehr zuläßt, der zu Geräusche verursachenden Momentensprüngen führen würde.

**Patentansprüche**

1. Vorrichtung zum Betreiben einer Last (12), mit einem Impulsbreitenmodulator (15), der in Abhängigkeit von einem Leistungsvorgabesignal (16) die elektrische Leistung durch Variation des Tastverhältnisses (TV) eines impulsbreitenmodulierten Signals (17) festlegt, dadurch gekennzeichnet, daß ein Vergleicher (19) vorgesehen ist, der das Leistungsvorgabesignal (16) mit einem Grenzwert (20) vergleicht und daß die Periodendauer (P1, P2) des impulsbreitenmodulierten Signals (17) bei einer Überschreitung des Grenzwerts (20) verlängert ist.

2. Vorrichtung nach Anspruch 1, dadurch gekennzeichnet, daß die Verlängerung der Periodendauer (P1, P2) kontinuierlich erfolgt.

3. Vorrichtung nach Anspruch 2, dadurch gekennzeichnet, daß die Ausschaltdauer (D2, D4) des impulsbreitenmodulierten Signals (17) oberhalb des Grenzwerts (20) konstant auf einem minimal vorgegebenen Wert gehalten ist.

4. Vorrichtung nach Anspruch 1, dadurch gekennzeichnet, daß die Verlängerung der Periodendauer (P1, P2) des impulsbreitenmodulierten Signals (17) in einer Stufe von einer ersten Periodendauer (P1) auf eine zweite Periodendauer (P2) vorgesehen ist.

5. Vorrichtung nach einem der vorhergehenden Ansprüche, dadurch gekennzeichnet, daß das Tastverhältnis (TV) von einer Änderung der Periodendauer (P1, P2) nicht beeinflußt ist.

6. Vorrichtung nach einem der vorhergehenden Ansprüche, dadurch gekennzeichnet, daß eine der Last (12) zugeordnete Endstufe (10) einen High-Side-Schalter (T1) sowie eine Pumpschaltung (22) zur Spannungserhöhung enthält und das der Grenzwert (20) auf die Funktionsfähigkeit der Pumpschaltung (20) abgestimmt ist.

Fig. 1

Fig. 2